# FASCICULE DE BREVET EUROPEEN

(11) **EP 1 024 674 B1**
(45) Date de publication et mention de la délivrance du brevet: **24.10.2007**
(21) Numéro de dépôt: 00400135.0
(22) Date de dépôt: 19.01.2000
(51) Int. Cl.: H04Q 7/22, H04Q 7/32

(54) **Procédé d'échange de répertoires téléphoniques dans un réseau mobile**
Verfahren zum Austausch von Telefonverzeichnissen in einem Mobilnetz
Method for the exchange of telephone directories in a mobile network

(30) Priorité: 28.01.1999 FR 9900970
(43) Date de publication de la demande: 02.08.2000
(73) Titulaire: SAGEM Communication, 75015 Paris (FR)
(72) Inventeur: Romao, M. Fernando, 95000 Cergy (FR)
(74) Mandataire: Schmit, Christian Norbert Marie

(56) Documents cités:
- EP-A- 0 748 135
- WO-A-92/14329

## Description

La présente invention a pour objet un procédé d'échange de données. Son domaine d'application est celui de la téléphonie mobile. Le but de l'invention est d'augmenter le confort d'utilisation des téléphones mobiles et d'étendre leurs fonctionnalités.

A l'heure actuelle tous les téléphones mobiles sont dotés d'un répertoire téléphonique, et d'une interface pour le gérer. Cette interface se compose d'un clavier, pour la saisie de données d'enregistrement et pour les commandes du téléphone mobile, et d'un écran pour la visualisation. Dans un souci de réduction de l'encombrement d'un téléphone mobile, les fabricants réduisent le nombre des touches du clavier au strict minimum, alors que le nombre de fonctionnalités a tendance à augmenter. Le nombre de touches se situe généralement au nombre de vingt dont dix sont numériques. Parmi ces dix touches neuf ont aussi une fonctionnalité alphabétique. Si on ajoute à l'alphabet latin quelques caractères spéciaux comme le point, l'espace ou le tiret on parvient à une moyenne de plus de trois lettres par touches. Avec un tel clavier, si la saisie d'un numéro est simple, la saisie d'un nom est fastidieuse et peut varier d'un modèle de téléphone mobile à l'autre. En général si un utilisateur veut accéder à une troisième lettre accessible avec une touche, il lui faut presser trois fois sur cette touche. Si cette même lettre apparaît plusieurs fois de manière consécutive dans un mot, il faut la saisir une première fois, la valider avec une autre touche, puis la saisir une seconde fois. Il peut par exemple être nécessaire de presser sept fois, sur deux touches différentes pour saisir deux fois la même lettre.

Il est ainsi pénible de composer un enregistrement d'un répertoire. Le répertoire d'un téléphone mobile peut contenir au moins cent enregistrements. Il est donc très pénible de les composer tous. Un problème se produit lorsque l'utilisateur change de téléphone mobile, suite à une perte, un vol, une destruction, ou tout simplement un désir de changer de modèle de téléphone mobile. Dans ce cas toute la saisie est à recommencer. Dans la mesure où un utilisateur de téléphone mobile ne conserve les numéros de ses proches que dans son téléphone mobile ce problème devient un problème critique.

Il est aussi inconfortable de s'échanger verbalement des coordonnées téléphoniques lors d'une conversation avec un téléphone mobile, lorsque celles-ci sont contenues dans le répertoire du téléphone mobile. L'utilisateur qui veut transmettre des coordonnées doit consulter son répertoire. Si cela n'est pas faisable lorsque le téléphone est en ligne, il doit raccrocher, consulter son répertoire, puis rappeler. Une fois les coordonnées trouvées, leur transmission se fait par la voix. Le demandeur doit alors les retenir ou les noter sur une feuille de papier. En effet la saisie en cours de conversation serait longue donc coûteuse. Puis une fois la communication terminée, le téléphone mobile raccroché, le demandeur doit mettre à jour son répertoire. La lourdeur de ce procédé va croissante avec le nombre de coordonnées à transmettre.

Pour un remplissage initial de répertoire, une solution partielle existe. Lorsqu'un utilisateur contracte un abonnement auprès d'un opérateur, il peut fournir à l'opérateur une liste de noms associés à des numéros. L'opérateur se charge alors de remplir le répertoire du téléphone mobile de l'utilisateur à partir de cette liste. En pratique ceci est réalisé par la mémorisation du répertoire dans une carte à microcircuit insérée dans le téléphone et qui est délivrée à l'utilisateur pour concrétiser son abonnement. Cela résout partiellement le problème du remplissage initial du répertoire. Mais un tel procédé ne résout pas un problème de faible capacité mémoire du microcircuit de la carte, ni celui de l'échange de coordonnées avec d'autres utilisateurs de téléphones mobiles. En outre une telle manière de faire conduit à réduire la sécurité du microcircuit de la carte puisqu'on prévoit dès l'origine qu'un utilisateur pourra en modifier le contenu. D'une part tous les opérateurs ne proposent pas cette solution. D'autre part en cas de changement d'abonnement ou d'opérateur il faut fournir une nouvelle liste.

A l'heure actuelle, il existe aussi un service de type téléphonique par lequel on transmet un numéro de téléphone d'un appelant à un appelé. Ce service payant est géré par un opérateur. Si un utilisateur s'abonne, il reçoit tous les numéros de téléphone sans discrimination. Si un utilisateur ne souhaite pas que son numéro de téléphone soit transmis, il adopte un mode fantôme, et son numéro de téléphone ne sera transmis à personne. Ce système, tel qu'il existe, manque donc de souplesse. En outre, le numéro de téléphone est transmis sans référence nominative au nom de l'appelant.

Dans ce cas, il est impossible d'associer un nom à ce numéro de téléphone. L'information reçue est donc peu utilisable par l'utilisateur, sauf si celui-ci connaît par avance les numéros de téléphones de toutes les personnes susceptibles de l'appeler. Enfin cette transmission s'effectue en ligne. Elle est adressée soit à l'écran soit à une mémoire de type premier entré, premier sorti : elle est donc fugitive. Sa mémorisation définitive ne peut être que manuelle, par la saisie d'un enregistrement.

Dans l'état de la technique on connaît aussi WO-A-92/14329 et EP-A-0 748 135.

L'invention permet de résoudre ces problèmes. Elle permet à un utilisateur de jouir des fonctionnalités de répertoire de son téléphone mobile avec des performances accrues. En effet, le procédé selon l'invention permet à un téléphone mobile d'échanger automatiquement des données qui vont servir à la mise à jour d'un répertoire téléphonique, celui de ce téléphone mobile ou celui d'un autre. Selon l'invention, l'échange est géré avec un nombre réduit de frappes sur des touches. En pratique, il s'agira de validations. Il s'agira préférentiellement de touches de gestion du répertoire du côté de l'émetteur. Il s'agira préférentiellement de touches de validation du côté du récepteur. En même temps que le nombre de touches utiles, le nombre de pression sur ces touches est aussi fortement réduit.

L'invention a donc pour objet un procédé d'échange de données avec un premier téléphone mobile comportant les étapes suivantes
- on structure une première mémoire de ce premier téléphone mobile en enregistrements avec dans chaque enregistrement des champs pour stocker des informations de types différents sur des personnes,
caractérisé en ce que
- on reçoit dans ce premier téléphone mobile des données par voie radioélectrique pour mettre à jour des enregistrements dans cette première mémoire, via une deuxième mémoire temporaire de ce téléphone,
- un utilisateur du premier téléphone mobile déclenche la mise à jour de la première mémoire à partir du contenu de la deuxième mémoire de mise à jour, de préférence par appui sur une touche d'un clavier du premier téléphone mobile après une consultation de le deuxième mémoire.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un téléphone mobile, d'une station de base et d'un serveur de communications munis des moyens nécessaires à la mise en oeuvre de l'invention ;
- Figure 2 : une illustration des étapes du procédé de l'invention;
- Figure 3 : une représentation schématique d'informations contenues dans un message court de mise à jour.

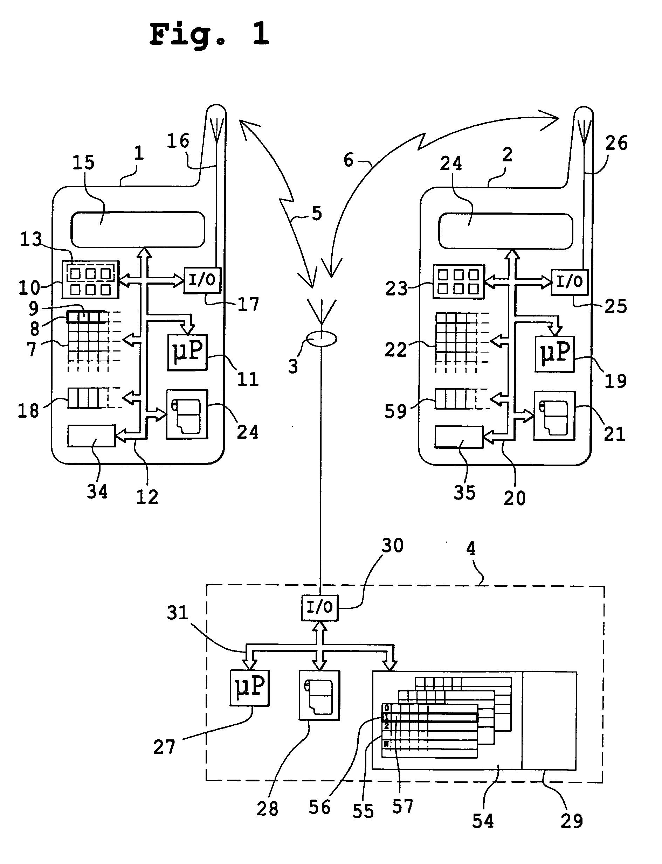

La figure 1 montre un premier téléphone 1 mobile, un deuxième téléphone 2 mobile, une station de base 3 et un serveur 4 de communications. Les téléphones 1 et 2 sont connectés entre eux par une liaison établie par l'intermédiaire d'un réseau. Ce réseau n'est pas représenté sur la figure. Dans la pratique il est constitué de stations de base telles que 3 reliées entre elles. Chacune des stations de base a en charge un secteur géographique. L'ensemble des stations de base crée le réseau. Par exemple, les téléphones 1 et 2 sont reliés par des liaisons radioélectriques 5 et 6 au serveur 4 par l'intermédiaire de la station de base 3. Pour simplifier l'explication, il peut très bien n'y avoir qu'un seul serveur 4 auquel seraient raccordées toutes les stations de base. Ici les téléphones mobiles 1 et 2 sont reliés à la même station 3 de base, ce qui n'est pas forcément le cas dans la pratique.

Le téléphone 1 contient une mémoire de données 7, un clavier 10, un microprocesseur 11, une mémoire programme 14 et un écran 15. Ces différents composants sont reliés entre eux par un bus 12. La mémoire 14 contient tous les programmes nécessaires à la gestion du téléphone 1, y compris ceux correspondant au procédé selon l'invention. La mémoire 14 peut contenir aussi bien des programmes que des données nécessaires à ces programmes, ou à leur espace de travail. La mémoire 7 mémorise des enregistrements tels que 8. Chaque enregistrement comporte un certain nombre de champs tels que 9. Chaque enregistrement est relatif à une personne. Chaque champ est relatif à une information sur cette personne. La mémoire 7 ainsi structurée en enregistrements 8 et en champs 9 constitue un répertoire téléphonique. Dans l'invention, il y a au moins deux champs dans un enregistrement. Un premier champ est relatif à une information de numéro de téléphone, un deuxième champ est relatif à un nom, voire à un numéro d'ordre. L'utilisateur du téléphone 1 accède à la mémoire 7 par l'intermédiaire du clavier 10 et de l'écran 15.

Un ensemble 13 de touches du clavier 10 est dédié à la gestion de la mémoire 7. Lorsqu'une touche de l'ensemble 13 est enfoncée, le microprocesseur 11 en est averti. Il met alors en oeuvre une fonction d'un programme contenu dans la mémoire 14. Par exemple, une visualisation s'effectue de manière connue avec ces touches. D'autres actions sont possibles comme des actions de mise à jour des enregistrements ou des compositions automatiques. Avant l'invention, une mise à jour ou une création dans le répertoire s'effectuait soit par une intervention d'un opérateur pour une mise à jour initiale, dans un circuit SIM amovible, soit par une saisie manuelle des données par l'intermédiaire du clavier 10.

Le téléphone 1 comporte d'autres éléments. Ceux-ci sont un aérien 16, relié à un circuit 17 électronique d'émission-réception. Le circuit 17 est relié au microprocesseur 11 par le bus 12. Le téléphone 1 contient aussi une mémoire 34 de configuration. Cette dernière contient des informations nécessaires au téléphone 1 pour définir son comportement dans des circonstances particulières, notamment dans le cadre de l'invention. Enfin le téléphone 1 contient une mémoire 18 reliée au bus 12 dont la taille est au moins égale à celle d'un enregistrement de la mémoire 7. Dans la pratique les mémoires 7, 18 et ou 34 peuvent faire partie de la mémoire 14. La représentation choisie ici favorise la compréhension du procédé suivant l'invention.

La figure 1 montre aussi un téléphone 2 qui contient au moins des éléments 19 à 26 semblables à ceux du téléphone 1. Elle montre aussi des éléments du serveur 4, utiles pour le procédé selon l'invention. Le serveur 4 comporte un microprocesseur 27 relié par un bus 31 à une mémoire 28 de programme, à une mémoire 29 de stockage de masse et à un circuit 30 d'émission réception. Une partie 54 de la mémoire 29 est structurée en tables 55. Chaque table comporte des enregistrements 56 qui ont une structure compatible avec celle des enregistrements de la mémoire 7. Le nombre de tables correspond par exemple au nombre d'abonnés au réseau. Le nombre d'enregistrements par table correspond au nombre d'enregistrements que peut contenir une mémoire 7. Les enregistrements d'une table de la mémoire 29 sont numérotés de zéro à N.

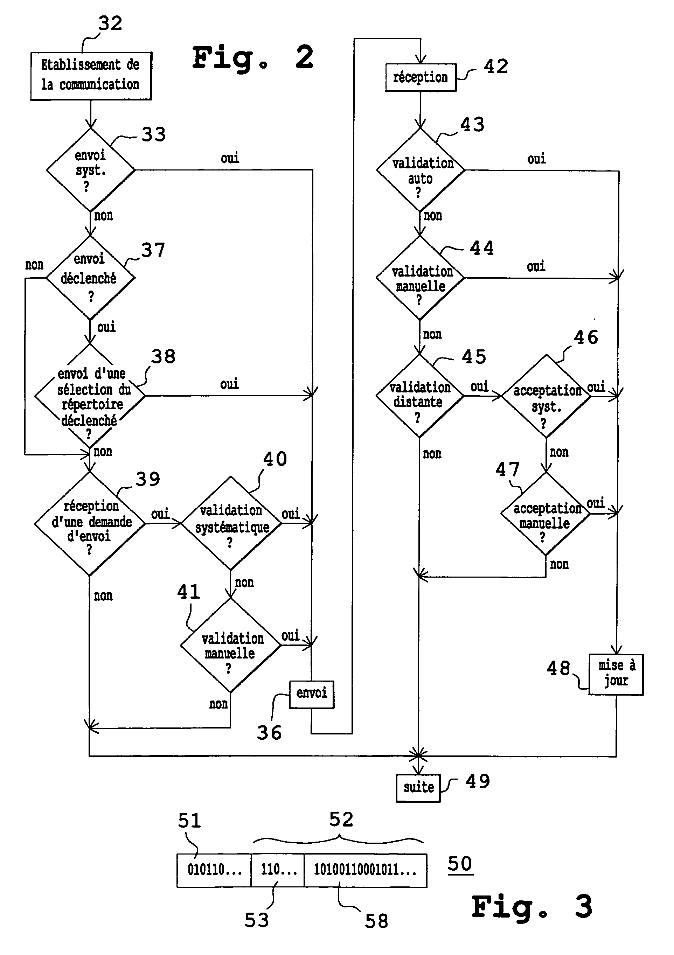

La figure 2 met en évidence différentes étapes du procédé d'échanges de données structurées selon l'invention. Une première étape 32, préliminaire, est un établissement de la communication. Au cours de cette étape un utilisateur du téléphone 1 mobile compose un numéro de téléphone et le valide. Cette opération est effectuée par le clavier 10. Le microprocesseur 11 prend acte de la validation et transmet au circuit 17 d'émission-réception des informations nécessaires pour émettre le numéro composé vers une station de base. Cela est fait grâce à un programme contenu dans la mémoire 14 et via l'aérien 16. La station de base 3 relaye les informations ainsi obtenues jusqu'au serveur 4 de communications. Le serveur 4 recherche le correspondant que cherche à joindre l'utilisateur du téléphone 1 et établit la liaison. Au cours d'une étape 33 ultérieure, on détermine si l'utilisateur du téléphone 1 souhaite que le contenu de sa mémoire 7 soit transmis systématiquement à son interlocuteur dès l'établissement d'une liaison. Pour l'exécution du test 33, le microprocesseur 11 lit la mémoire 34 de configuration. Si cette lecture révèle que l'utilisateur du téléphone 1 mobile souhaite l'émission systématique du contenu de sa mémoire 7, on exécute une étape 36 d'envoi des données concernées. Sinon on passe à une étape 37.

L'étape 37 laisse le choix à l'utilisateur du téléphone 1 de l'envoi de son répertoire téléphonique. Ce choix est provoqué par l'enfoncement d'une touche prédéfinie du clavier 10. Si cette touche est enfoncée le microprocesseur 11 le détecte et met en oeuvre le programme de la mémoire 14 correspondant. Il se retrouve alors dans l'étape 38. Si cette touche n'est pas enfoncée, on passe à une étape 39.

Dans l'étape 38, l'utilisateur du téléphone 1 peut sélectionner tout ou partie des enregistrements contenus dans la mémoire 7. Au cours de cette sélection l'utilisateur utilise l'ensemble 13 de touches pour accéder à la mémoire 7, et pour sélectionner le ou les enregistrements qu'il souhaite envoyer. Une fois qu'il a trouvé les enregistrements souhaités, il les valide. On passe alors à l'étape 36. Cette opération peut aussi être répétée autant de fois qu'il y a d'enregistrements à envoyer. Dans la mesure où la sélection est effectuée durant la communication, cette sélection a un coût, qui reste minime s'il n'y a qu'un seul enregistrement à envoyer, mais qui peut devenir significatif si le nombre d'enregistrements est important.

Dans une variante, l'utilisateur peut décider de marquer les enregistrements qu'il souhaite envoyer avant d'établir la communication. Ce marquage s'effectue grâce à l'ensemble 13 de touches. A la visualisation d'un enregistrement de la mémoire 7, pendant un parcours de la mémoire 7, l'utilisateur peut enfoncer une touche prédéfinie de l'ensemble 13 de touches pour marquer l'enregistrement visualisé. Cela a pour effet de modifier un champ prédéfini de l'enregistrement visualisé et relatif au caractère envoyable de cet enregistrement. Bien sûr les enregistrements peuvent être marqués pour être envoyés ou pour ne pas être envoyés. Le marquage étant fait, l'utilisateur du téléphone 1 pourra, au cours d'une communication, presser une touche prédéfinie qui déclenchera le parcours de la mémoire 7, et l'envoi de tous les enregistrements marqués comme devant être envoyés. L'envoi des enregistrements sera décrit dans l'étape 36. Si l'utilisateur ne souhaite pas envoyer d'enregistrements de la mémoire 7 le procédé passe à l'étape 39.

Dans cette étape 39, le téléphone 1 reçoit une demande d'envoi de son répertoire. Dès cette réception, le programme de la mémoire 14 commande au cours d'une étape 40 au microprocesseur 11 d'aller lire la mémoire 34 de configuration. S'il ressort de cette lecture que l'utilisateur souhaite autoriser systématiquement l'émission de son répertoire en cas de demande, alors on passe à l'étape 36. Sinon, on passe à une étape 41. Dans l'étape 41, l'utilisateur du téléphone 1 est averti qu'une demande d'envoi de données de son répertoire vient d'être reçue. L'avertissement peut être sonore ou revêtir tout autre forme choisie par le constructeur du téléphone mobile. L'utilisateur décide alors, via le clavier 10, d'autoriser l'envoi de son répertoire, en tout ou partie, ou pas du tout. S'il enfonce une touche prédéfinie autorisant un envoi, on passe à l'étape 36. Sinon le programme continue à gérer la communication par une étape 49.

Pour l'étape 36, le programme selon l'invention fait extraire par le microprocesseur 11 de la mémoire 7, les données d'un message à envoyer au serveur 4. Une fois ces données obtenues, le microprocesseur 11 les transmet au circuit 17 d'émission réception. Le circuit 17 transforme ces informations numériques en un message radioélectrique émis en direction du serveur 4 par l'intermédiaire de l'aérien 16. La station de base 3 reçoit le message radioélectrique par son circuit 30 d'émission-réception.

Le circuit 30 transforme le message radioélectrique reçu en message numérique et transmet ce message numérique au microprocesseur 27. Le programme contenu dans la mémoire 28 et s'exécutant sur le microprocesseur 27 transmet alors au circuit 30 d'émission-réception d'une station de base en relation avec le téléphone 2 le message numérique à transmettre. Ce circuit 30 l'émet ici vers la station de base 3. En variante, le contenu de la mémoire 7 a été sauvegardé dans une mémoire 54 du serveur 4, et un ordre de téléchargement est transmis à ce serveur 4. En exécution de cet ordre, le microprocesseur 27 est chargé de la constitution du message numérique avant transmission au téléphone mobile 2 (ou au téléphone mobile 1 si celui-ci veut récupérer dans la mémoire d'un nouveau téléphone mobile le répertoire mémorisé dans un ancien téléphone mobile et qui a été sauvegardé dans le serveur 4).

Une fois émises, les données sont reçues dans un téléphone mobile 2, au cours d'une étape 42. Dans cette étape 42 le téléphone 2 reçoit par l'intermédiaire de l'aérien 26 un signal radioélectrique. Ce signal radioélectrique est transmis au circuit 25 d'émission-réception. Ce circuit 25 transforme le signal radioélectrique en signal numérique intelligible par le microprocesseur 19. Un programme contenu dans la mémoire 21 traite ce signal numérique à l'aide du microprocesseur 19, dans le but d'en extraire les informations. Dans le cas qui intéresse l'invention, il s'agit d'au moins un nom et d'au moins un numéro de téléphone. Ce nom et ce numéro de téléphone vont de préférence être écrit dans une mémoire 59 temporaire. Ainsi l'utilisateur a la possibilité de consulter cette mémoire 59 temporaire avant de décider la mise à jour de la mémoire 22. Il existe cependant un mode de fonctionnement, sélectionnable par l'utilisateur, dans le lequel la mise à jour de la mémoire 22 à partir de la mémoire 59 est automatique. La réception de ces informations par le téléphone 2 s'accompagne, ou pas, d'un bip sonore, ou autre événement prévu par le constructeur du téléphone mobile. Le but de cet événement est de prévenir l'utilisateur de l'arrivée d'informations. On passe ensuite à un étape 43.

Dans l'étape 43, le programme de la mémoire 21 ordonne au microprocesseur 19 d'aller lire la mémoire 35 de configuration du téléphone 2. Si cette lecture révèle que l'utilisateur du téléphone 2 mobile souhaite que tous les enregistrements reçus soient écrits automatiquement dans son répertoire, alors on passe à une étape 48 de mise à jour. Sinon on passe à une étape 44.

Dans l'étape 44, l'utilisateur du téléphone 2 peut décider de valider en bloc la mise à jour de tous les enregistrements reçus. Pour ce faire, il lui suffit d'enfoncer un bouton prédéfini. S'il le fait, on passe à l'étape 48, sinon on passe à une étape 45.

Dans l'étape 45, le téléphone 2 reçoit de la part du téléphone 1 mobile, un ordre de mise à jour de la mémoire 22 du téléphone 2. Cet ordre est exécuté si une action correspondante est entreprise sur le clavier 23. On passe alors à une étape 46. Sinon le programme continue à gérer la suite de la communication par l'étape 49. Dans l'étape 46, le programme cherche à déterminer si l'utilisateur souhaite valider systématiquement tous les ordres de mise à jour émanant de téléphones distants. Pour ce faire, le microprocesseur 19 lit la mémoire 35 de configuration. Si cette lecture révèle que l'utilisateur du téléphone 2 mobile souhaite une validation systématique des ordres de mise à jour distants, alors on passe à l'étape 48. Sinon on passe à une étape 47.

Dans l'étape 47, l'utilisateur est averti de la réception d'un ordre de mise à jour distant par un bip sonore, ou par tout autre moyen. Il peut alors décider de valider l'ordre de mise à jour en enfonçant une touche prédéfinie. S'il le fait, on passe à l'étape 48. Sinon le programme continue à gérer la suite de la communication, c'est l'étape 49.

Dans l'étape 48 de mise à jour, le programme selon l'invention, commande au microprocesseur 19 de transférer le contenu de la mémoire 59 temporaire vers la mémoire 22 répertoire. Ce transfert peut amener à la création d'un nouvel enregistrement dans la mémoire 22 si le nom et le numéro de téléphone reçus ne sont pas déjà présents dans la mémoire 22. Le cas où le nom ou le numéro de téléphone est déjà présent dans la mémoire 22 est signalé à l'utilisateur qui doit choisir, via une touche prédéfinie ou via la configuration de son téléphone, si l'enregistrement existant doit être modifié, ou s'il faut en créer un nouveau. Le transfert n'est pas nécessairement suivi de l'effacement de la mémoire 26 temporaire de l'enregistrement transféré. En effet il se peut qu'au cours de la tentative de transfert, le programme de la mémoire 21 constate que la mémoire 22 est pleine. Il le signalera alors à l'utilisateur du téléphone 2. L'utilisateur du téléphone 2, sera alors libre de supprimer un des enregistrements de la mémoire 22, en utilisant les fonctions prévues à cet effet. Une fois cette opération faite, il pourra repasser par l'étape 48.

Le procédé de réception de l'invention utilise de préférence un protocole dit de service de messages courts, aussi connu sous le nom de SMS (Short Message Service). Ce protocole autorise des messages d'une longueur de 160 caractères. On peut chaîner jusqu'à quinze messages consécutifs, soit 2400 caractères dans un message. De plus ce protocole est présent sur tous les téléphones mobiles du marché. Il est en général utilisé par les opérateurs pour prévenir leurs abonnés qu'ils ont reçu de nouveaux messages dans leurs boîtes vocales. Les enregistrements dont il a été question précédemment sont donc envoyés via des messages au protocole SMS.

La figure 3 illustre la composition d'un message selon un protocole SMS, ou selon un autre protocole, mais utilisable dans l'invention. Un message SMS 50 est composé d'un en-tête 51, connu, et d'un corps 52 de message. Le procédé suivant l'invention découpe le corps 52 de message en deux sections, une section 53 d'instruction, et une section 58 de données. La section 53 d'instruction contient une information sur ce qu'il faut faire du contenu de la section 58 de données. La section 58 de données comporte au moins deux champs relatifs au nom et au numéro de téléphone à enregistrer dans un répertoire. Dans le cas où un téléphone 1 envoie des données de son répertoire téléphonique à un téléphone 2, un programme contenu dans la mémoire 14 constitue un message SMS à partir des données à envoyer. L'en-tête du message est constitué de façon connue. Par contre, la section 53 est remplie avec un code, prédéfini, signifiant que le contenu de la section 58 comporte des données de répertoire téléphonique et que ces données sont à enregistrer dans le répertoire du téléphone récepteur. La section 58 est remplie avec un ou des noms et un ou des numéros de téléphone. Dans ce but, à l'émission, le code prédéfini placé en section 53 dépend de la configuration de la mémoire 34 et/ou des touches enfoncées selon les étapes 33, 37 ou 38 à 41. En réception, l'action du microprocesseur 19 est de lire la section 53, et d'interpréter son contenu en fonction de la configuration de la mémoire 35 et/ou des touches enfoncées aux étapes 42 à 47. A cet effet, la place de la section 53 dans le corps 52 du message est un élément déterminant de l'invention, pour que les microprocesseurs 11 et 19 puissent se comprendre.

En réception d'un message SMS par le téléphone 2, un programme de la mémoire 21 décode l'en-tête 51 de manière connue. Puis il teste le contenu de la section 53 pour déterminer si son contenu est un code instruction ou pas. Dans le cas présent, il détermine qu'il s'agit du code instruction correspondant au transfert de coordonnées téléphoniques. Un programme adéquat, contenu dans la mémoire 21, est appelé pour traiter le contenu de la section 58.

Dans la pratique il y a un code instruction par cas qui a été traité, échange d'enregistrement entre téléphone mobile, demande d'émission d'enregistrement depuis un répertoire d'un téléphone mobile, demande de mise à jour d'un répertoire, sauvegarde d'un répertoire d'un téléphone mobile sur un serveur, mise à jour d'un nom dans un enregistrement zéro sur un serveur. La liste n'est pas exhaustive est peut être complétée en fonction de besoins à venir.

L'émission d'enregistrements par le téléphone 1 peut aussi être destinée au serveur 4 au lieu d'être destiné à un téléphone 2. Le but de cette opération est de créer une sauvegarde de la mémoire 7. Cette opération peut être déclenchée par exemple par l'enfoncement d'une touche prédéfinie. Une fois l'opération déclenchée, le téléphone 1 se connecte au serveur 4. Le programme contenu dans la mémoire 14 commande au microprocesseur 11 de parcourir la mémoire 7. Un message numérique est composé à partir de chaque enregistrement de la mémoire 7. Ces messages numériques sont transmis via le circuit 17 et via l'aérien 16 à la station de base 3. Le serveur 4 relié à la station de base 3 connaît l'émetteur du message par son numéro IMSI. A ce numéro correspond un espace mémoire de la mémoire 29. Le programme contenu dans la mémoire 28 extrait du premier message numérique l'enregistrement qu'il contient, et le stocke dans l'enregistrement numéro un de la zone mémoire 55 allouée au numéro IMSI de l'émetteur. L'enregistrement contenu dans le deuxième message numérique est stocké dans l'enregistrement numéro deux de la zone mémoire allouée au numéro IMSI de l'émetteur, et ainsi de suite, autant de fois qu'il y a d'enregistrements dans la mémoire 7. Dans une variante de l'invention, on envisage de transmettre plusieurs enregistrements par un seul message.

L'enregistrement zéro d'une table 55 de la mémoire 29 contient des informations relatives au titulaire d'un abonnement. Cet enregistrement correspond au numéro IMSI auquel est alloué cette table. Ces informations contiennent notamment le nom du titulaire stocké dans un champ 57 de l'enregistrement zéro. D'autres informations sont mémorisées dans d'autres champs, notamment le numéro de téléphone attribué au titulaire. Le contenu du champ 57 peut être modifié par le titulaire de l'abonnement après vérification que l'identité de l'appelant correspond à l'identifiant IMSI mémorisé dans la table 55. Cette modification ne peut se faire que grâce à un téléphone 1 dans lequel a été inséré une carte SIM (Subcriber Identity Module) contenant toutes les informations relatives à cet abonnement et en particulier le numéro IMSI. A partir du clavier 10 de ce téléphone 1 mobile, l'abonné peut saisir le nouveau contenu du champ 57. Puis il appuie sur une touche prédéfinie de ce même clavier 10 pour déclencher le transfert de la saisie vers le serveur 4 qui met à jour l'enregistrement zéro de la table 55 correspondant au numéro IMSI de l'abonné. Dans une variante de l'invention, on peut étendre le nombre de champs modifiables de l'enregistrement zéro. En plus du nouveau contenu, l'utilisateur devra alors saisir le numéro du champ qu'il souhaite modifier.

Dans une variante de l'invention un utilisateur du téléphone 1 décide d'envoyer des données le concernant, c'est-à-dire son nom et son numéro de téléphone, vers le téléphone 2. Celles-ci ne sont pas dans le téléphone 1, mais dans un enregistrement zéro dans le serveur 4. Le téléphone 1 va donc envoyer vers le serveur 4 un message dont le code 53 instruction va déclencher l'envoi, par le serveur 4, d'un message, constitué à partir d'un enregistrement zéro, vers le téléphone 2. En variante, cet utilisateur peut entrer ses propres références dans la mémoire 7.

L'ensemble des enregistrements zéro des tables de la partie 54 de la mémoire 29 forme un annuaire téléphonique. En effet, en plus du champ 57, correspondant au nom, un enregistrement zéro contient aussi un numéro de téléphone. Selon l'invention, cet annuaire peut alors être consulté, notamment par tous les abonnés au réseau. Dans ce but, un utilisateur de téléphone mobile saisit grâce à son clavier 10 le nom d'une personne dont il souhaite connaître le numéro de téléphone. Plus généralement il saisit une valeur d'un critère de sélection consultable dans les champs de la mémoire 54. Puis il appuie sur une touche prédéfinie du clavier 10. Cette action déclenche la connexion du téléphone au serveur 4 puis l'exécution d'un programme contenu dans la mémoire 28 pour traiter le message. En exécution de ce programme, le serveur 4 extrait le nom et fait une recherche, à partir de ce nom, dans l'ensemble des enregistrements zéro. Puis le serveur compose un message de réponse (de préférence de type SMS) qu'il transmet au téléphone mobile appelant. Puis, de préférence, le serveur 4 coupe la connexion.

Soit la réponse reçue est négative, il y a alors affichage d'un message du type "pas de réponse". Soit elle est positive et les données demandées sont affichées sur l'écran 15. L'utilisateur du téléphone 1 peut alors décider de stocker les données reçues dans sa mémoire 7, comme précédemment décrit pour un échange entre téléphones mobiles. Les données envoyées par le serveur respectent alors la répartition évoquée à la figure 3.

## Revendications

1. Procédé d'échange de données avec un premier téléphone (2) mobile comportant les étapes suivantes
- on structure une première mémoire (22) de ce premier téléphone mobile en enregistrements (8) avec dans chaque enregistrement des champs (9) pour stocker des informations de types différents sur des personnes,
**caractérisé en ce que**
- on reçoit (42) dans ce premier téléphone mobile des données par voie radioélectrique pour mettre à jour des enregistrements dans cette première mémoire, via une deuxième mémoire (59) temporaire de ce téléphone,
- un utilisateur du premier téléphone mobile déclenche la mise à jour de la première mémoire à partir du contenu de la deuxième mémoire de mise à jour, de préférence par appui sur une touche d'un clavier (10, 23) du premier téléphone mobile après une consultation de la deuxième mémoire.

2. Procédé selon la revendication 1, **caractérisé en ce que**
- on émet d'un deuxième téléphone (1) mobile des données pour mettre à jour la première mémoire.

3. Procédé selon la revendication 2, **caractérisé en ce que**
- on émet d'un deuxième téléphone (1) mobile des données pour mettre à jour une deuxième mémoire (29) d'un serveur (4) de communications avec ce deuxième téléphone mobile.

4. Procédé selon l'une des revendications 2 à 3, **caractérisé en ce que**
- on émet des données de mise à jour systématiquement (33), dès l'établissement d'une connexion entre deux téléphones mobiles, ou entre un téléphone mobile et un serveur de communications avec ce téléphone mobile.

5. Procédé selon l'une des revendications 2 à 4, **caractérisé en ce que**
- un utilisateur du deuxième téléphone mobile déclenche (37) l'émission de données de mise à jour, de préférence par appui sur une touche d'un clavier (10, 23) du premier ou du deuxième téléphone mobile.

6. Procédé selon la revendication 5, **caractérisé en ce qu'**on sélectionne (38) des données émises par un téléphone mobile dans un répertoire de ce téléphone mobile.

7. Procédé selon la revendication 1 à 6, **caractérisé en ce que**
- on émet d'un serveur de communications avec ce premier téléphone mobile des données pour mettre à jour la première mémoire.

8. Procédé selon l'une des revendications 1 à 7, **caractérisé en ce que**
- on choisit (35) que la mise à jour de la première mémoire soit systématique (43) dès la réception de nouvelles données.

9. Procédé suivant l'une des revendications 1 à 8, **caractérisé en ce que**
- on reçoit des données dans un téléphone mobile en utilisant un protocole SMS (50-53).

10. Procédé suivant l'une des revendications 1 à 9, **caractérisé en ce que**
- dans un message (50) à un protocole SMS on incorpore un code (53) instruction de mise à jour, et
- dans le premier téléphone, ou dans un serveur, on teste la présence de ce code instruction.

11. Procédé suivant l'une des revendications 1 à 10, **caractérisé en ce que**
- on forme un annuaire téléphonique dans un serveur de communication, et
- on transmet au premier téléphone mobile une partie de cet annuaire correspondant à un critère de sélection (IMSI).

12. Procédé suivant la revendication 1 à 11, **caractérisé en ce qu'**un titulaire d'un abonnement modifie des informations de cet annuaire après vérification d'un identifiant d'appel.

## Claims

1. A method for exchanging data with a first mobile telephone (2) comprising the following steps
- A first memory (22) of this first mobile telephone is structured in records (8) with fields (9) in each record to store information of various types on persons,
**Characterized in that**
- Data is received (42) in this first mobile telephone by radio to update records in this first memory, via a second temporary memory (59) of this telephone,
- A user of the first mobile telephone initiates the updating of the first memory from the content of the second update memory, preferably by pressing on a key of a keypad (10, 23) of the first mobile telephone after consultation of the second memory.

2. The method according to claim 1, **characterized in that**
- Data for updating the first memory is transmitted from a second mobile telephone (1).

3. The method according to claim 2, **characterized in that**
- Data for updating a second memory (29) of a server (4) in communication with a second mobile telephone is transmitted from this second mobile telephone (1).

4. The method according to one of claims 2 to 3, **characterized in that**
- Updating data is systematically transmitted (33), once a connection between two mobile telephones has been established, or between one mobile telephone and one server in communication with this mobile telephone.

5. The method according to one of claims 2 to 4, **characterized in that**
- A user of the second mobile telephone initiates (37) the transmission of updating data, preferably by pressing on a key of a keypad (10, 23) from the first or second mobile telephone.

6. The method according to claim 5, **characterized in that** data transmitted by a mobile telephone is selected (38) in a directory of this mobile telephone.

7. The method according to claims 1 to 6, **characterized in that**
- Data for updating the first memory is transmitted from a server in communication with this first mobile telephone.

8. The method according to one of claims 1 to 7, **characterized in that**
- One chooses (35) whether the updating of the first memory is systematic (43) once new data is received.

9. The method according to one of claims 1 to 8, **characterized in that**
- Data is received in a mobile telephone by utilizing an SMS protocol (50-53).

10. The method according to one of claims 1 to 9, **characterized in that**
- An updating instruction code (53) is incorporated In an SMS protocol message (50), and
- The presence of this instruction code is tested in the first telephone or in a server.

11. The method according to one of claims 1 to 10, **characterized in that**
- A telephone directory is formed in a communications server, and
- A part of this directory corresponding to a selection criteria (IMSI) is transmitted to the first mobile telephone.

12. The method according to claims 1 to 11, **characterized in that** a subscription holder modifies information in this directory after verification of a call identifier.

## Patentansprüche

1. Datenaustauschverfahren mit einem ersten Mobiltelefon (2), das die folgenden Schritte umfasst:
- man strukturiert einen ersten Speicher (22) dieses ersten Mobiltelefons mit Aufzeichnungen (8), wobei jede Aufzeichnung Felder (9) hat, um Informationen unterschiedlicher Typen über Personen zu speichern,
**dadurch gekennzeichnet,**
- **dass** man (42) in diesem ersten Mobiltelefon Daten per Funk über einen Zwischenspeicher (59) dieses Mobiltelefons empfängt, um Aufzeichnungen in diesem ersten Speicher zu aktualisieren,
- **dass** ein Benutzer des ersten Mobiltelefons das Aktualisieren des ersten Speichers ausgehend von dem Inhalt des zweiten Aktualisierungsspeichers auslöst, vorzugsweise durch Betätigen einer Taste einer Tastatur (10, 23) des ersten Mobiltelefons nach einem Einsehen des zweiten Speichers.

2. Verfahren nach Anspruch 1, **dadurch gekennzeichnet,**
- **dass** man von einem zweiten Mobiltelefon (1) Daten zum Aktualisieren des ersten Speichers sendet.

3. Verfahren nach Anspruch 2, **dadurch gekennzeichnet,**
- **dass** man von einem zweiten Mobiltelefon (1) Daten sendet, um einen zweiten Speicher (29) eines Kommunikationsservers (4) mit diesem zweiten Mobiltelefon zu aktualisieren.

4. Verfahren nach einem der Ansprüche 2 bis 3, **dadurch gekennzeichnet,**
- **dass** man systematisch (33) Aktualisierungsdaten ab dem Herstellen einer Verbindung zwischen zwei Mobiltelefonen sendet oder zwischen einem Mobiltelefon und einem Kommunikationsserver mit diesem Mobiltelefon.

5. Verfahren nach einem der Ansprüche 2 bis 4, **dadurch gekennzeichnet,**
- **dass** ein Benutzer des zweiten Mobiltelefons das Senden von Aktualisierungsdaten auslöst (37), vorzugsweise durch Drücken auf eine Taste einer Tastatur (10, 23) des ersten oder des zweiten Mobiltelefons.

6. Verfahren nach Anspruch 5, **dadurch gekennzeichnet, dass** man Daten, die von einem Mobiltelefon gesendet werden, aus einem Verzeichnis dieses Mobiltelefons auswählt (38).

7. Verfahren nach Anspruch 1 bis 6, **dadurch gekennzeichnet,**
- **dass** man von einem Kommunikationsserver mit diesem ersten Mobiltelefon Daten zum Aktualisieren des ersten Speichers sendet.

8. Verfahren nach einem der Ansprüche 1 bis 7, **dadurch gekennzeichnet,**
- **dass** man auswählt (35), dass die Aktualisierung des ersten Speichers ab dem Empfang neuer Daten systematisch (43) ist.

9. Verfahren nach einem der Ansprüche 1 bis 8, **dadurch gekennzeichnet,**
- **dass** man Daten in einem Mobiltelefon empfängt, indem man ein SMS-Protokoll (50-53) verwendet.

10. Verfahren nach einem der Ansprüche 1 bis 9, **dadurch gekennzeichnet,**
- **dass** man in eine Mitteilung (50) zu einem SMS-Protokoll einen Aktualisierungsahweisungscode (53) einfügt und
- **dass** man in dem ersten Mobiltelefon oder in einem Server die Gegenwart dieses Anweisungscodes prüft.

11. Verfahren nach einem der Ansprüche 1 bis 10, **dadurch gekennzeichnet,**
- **dass** man ein Telefonbuch in einem Kommunikationsserver bildet, und
- **dass** man dem ersten Mobiltelefon einen Teil dieses Telefonbuchs, der einem Auswahlkriterium (IMSI) entspricht, überträgt.

12. Verfahren nach Anspruch 1 bis 11, **dadurch gekennzeichnet, dass** ein Inhaber eines Abonnements Informationen dieses Telefonbuchs nach Prüfen eines Anrufidentifikators modifiziert.
